# FASCICULE DE BREVET EUROPEEN

(11) **EP 2 150 693 B1**
(45) Date de publication et mention de la délivrance du brevet: **05.09.2012**
(21) Numéro de dépôt: 08805617.1
(22) Date de dépôt: 28.05.2008
(51) Int. Cl.: F02D 13/02, F01L 9/04, F01L 13/00

(54) **PROCEDE ET DISPOSITIF DE COMMANDE DE SOUPAPE AVEC PLUSIEURS PHASES DE LEVEE, PROCEDE D'ALIMENTATION D'UN MOTEUR THERMIQUE EN COMBURANT**
VERFAHREN UND VORRICHTUNG ZUR STEUERUNG EINES VENTILS MIT MEHREREN HUBPHASEN SOWIE VERFAHREN ZUR VERSORGUNG EINER WÄRMEMASCHINE MIT EINEM OXIDATIONSMITTEL
METHOD AND DEVICE FOR CONTROLLING A VALVE WITH SEVERAL LIFT PHASES, AND METHOD FOR SUPPLYING A THERMAL ENGINE WITH OXIDANT

(30) Priorité: 30.05.2007 FR 0703835
(43) Date de publication de la demande: 10.02.2010
(73) Titulaire: Valeo Systèmes de Contrôle Moteur, 95800 Cergy (FR)
(72) Inventeur: GELEZ, Nicolas, F-78230 Le Pecq (FR); DALISSIER, Jean-Guilhem, F-27380 Charleval (FR); FOURNIGAULT, Damien, F-78700 Conflans Ste Honorine (FR); HOBRAICHE, Julien, F-60710 Chevrieres (FR)
(86) Numéro de dépôt international: PCT/FR2008/000727
(87) Numéro de publication internationale: WO 2009/004162

(56) Documents cités:
- EP-A- 0 973 178
- WO-A-00/63535
- WO-A-01/40643
- DE-A1- 10 106 169
- DE-A1- 10 206 031
- DE-A1- 19 733 139
- DE-A1- 19 756 342
- DE-A1- 19 836 297
- DE-A1- 19 926 506
- DE-A1- 19 938 749
- FR-A- 2 297 321
- FR-A- 2 808 564
- FR-A- 2 878 891

## Description

La présente invention concerne un procédé et un dispositif de commande de soupape avec plusieurs phases de levée. Ce procédé et ce dispositif sont par exemple utilisables pour la commande des soupapes d'un moteur thermique de véhicule automobile (voir DE 197 33 139 A1). L'invention a également pour objet un procédé d'alimentation en comburant d'un moteur thermique.

### ARRIERE PLAN DE L'INVENTION

Les moteurs thermiques utilisés dans le domaine automobile comprennent généralement un bloc délimitant des cylindres ayant une extrémité fermée par une culasse et recevant à coulissement des pistons reliés à un vilebrequin. Dans les moteurs à quatre temps, la culasse est pourvue de conduits d'admission et d'échappement associés respectivement à des soupapes d'admission et d'échappement mobiles chacune entre une position d'ouverture dans laquelle elle met en communication le cylindre et le conduit correspondant et une position de fermeture dans laquelle elle isole le cylindre du conduit correspondant.

Pour l'actionnement des soupapes, en particulier les soupapes d'admission, il est envisagé désormais de recourir à des dispositifs de commande comportant un actionneur électromagnétique associé à au moins une soupape et relié à une unité de pilotage programmée pour commander l'actionneur en fonction de paramètres prédéterminés de fonctionnement optimal du moteur, et notamment la charge d'air à introduire dans le cylindre.

Il existe plusieurs modes de pilotage et notamment les modes EIVC et LIVO. Dans le mode EIVC (de l'anglais « Early Intake Valve Closing »), la soupape est ouverte puis fermée dès que la quantité d'air introduite est suffisante. Ce mode de pilotage permet de réduire les pertes par pompage qui sont souvent présentes par ailleurs dans les moteurs dans lesquels les soupapes sont actionnées classiquement par un arbre à cames. Toutefois ce mode de pilotage ne favorise pas la formation de turbulences dans le cylindre lors de l'admission d'air, engendrant un rendement de combustion relativement faible. Dans le mode LIVO (de l'anglais « Last Intake Valve Opening »), la soupape d'admission est ouverte tardivement, lorsqu'une détente se produit dans le cylindre en raison de la descente du piston, puis fermée dès que la quantité d'air introduite est suffisante comme dans le mode EIVC. Les pertes par pompage sont plus élevées que dans le mode EIVC seul, mais le rendement de combustion est amélioré.

### OBJET DE L'INVENTION

L'invention a notamment pour but de permettre une admission d'air optimisée dans les moteurs thermiques à soupapes d'admission pilotées.

### RESUME DE L'INVENTION

A cet effet, on prévoit, selon l'invention, un procédé de commande d'une soupape de moteur thermique selon la revendication 1.

Ainsi, dans le procédé de l'invention, la soupape est amenée et maintenue successivement dans plusieurs positions ouvertes. Le comportement et le débit du fluide ne sont pas les mêmes dans ces positions de sorte que le positionnement successif de la soupape dans ces positions permet d'en combiner les avantages. La phase d'amenée de la soupape en position d'ouverture précède ou suit la phase de maintien de la soupape dans la position intermédiaire.

L'invention concerne également un dispositif pour la mise en oeuvre de ce procédé, selon la revendication 4.

En outre, l'invention a pour objet un procédé d'alimentation en comburant d'un cylindre de moteur thermique pendant un temps d'admission en déplaçant une soupape d'admission entre une position de fermeture et une position d'ouverture, comprenant au moins une phase d'amenée de la soupape en position d'ouverture et une phase de maintien de la soupape dans une position intermédiaire entre la position de fermeture et la position d'ouverture, selon la revendication 7.

L'agitation aérodynamique, la vitesse de remplissage et les pertes de remplissage résultant de l'amenée en position d'ouverture et du maintien en position intermédiaire ne sont notamment pas les mêmes de sorte que la succession de ces deux phases permet d'en combiner les avantages.

Selon un premier mode de commande de la soupape, la phase d'amenée de la soupape en position d'ouverture précède la phase de maintien de la soupape dans la position intermédiaire.

La phase d'amenée en position d'ouverture permet d'assurer la majeure partie du remplissage du cylindre avec des pertes de charge limitées tandis que la phase de maintien en position intermédiaire permet de maintenir dans le cylindre une agitation aérodynamique de la charge de comburant, de préférence jusqu'au temps de compression qui suit le temps d'admission, agitation aérodynamique qui favorise la combustion.

Selon un deuxième mode de commande, la phase d'amenée de la soupape en position d'ouverture suit la phase de maintien de la soupape dans la position intermédiaire.

La phase de maintien en position intermédiaire permet de faciliter le déplacement ultérieur de la soupape vers la position d'ouverture en limitant la consommation d'énergie nécessaire au déplacement de la soupape tandis que l'amenée de la soupape en position d'ouverture permet d'assurer la majeure partie du remplissage du cylindre avec des pertes de charge limitées. La phase d'amenée en position d'ouverture permet en outre ici de maintenir dans le cylindre une agitation aérodynamique de la charge de comburant de préférence jusqu'au temps de compression qui suit le temps d'admission.

De préférence, les phases d'amenée et de maintien ont des durées déterminées en fonction d'une charge de comburant à introduire dans le cylindre.

La charge de comburant dépend directement de la durée des phases de maintien de sorte qu'il n'est pas nécessaire de prévoir à cet effet une vanne sur le conduit d'admission.

Avantageusement, les durées sont déterminées pour que la soupape soit amenée en position de fermeture au voisinage du début d'un temps de compression du comburant suivant le temps d'admission.

L'agitation aérodynamique du comburant procurée par l'admission du comburant est ainsi maintenue jusqu'au début du temps de compression, ce qui va améliorer l'inflammabilité de celui-ci et permettre l'obtention d'une combustion de bonne qualité.

D'autres caractéristiques et avantages de l'invention ressortiront à la lecture de la description qui suit de modes de mises en oeuvre particuliers non limitatifs de l'invention.

### BREVE DESCRIPTION DES DESSINS

Il sera fait référence aux dessins annexés, parmi lesquels :
- la figure 1 est une vue schématique partielle d'un moteur thermique permettant la mise en oeuvre de l'invention,
- la figure 2 est une vue schématique partielle d'un moteur de ce cylindre,
- les figures 3 et 4 sont deux diagrammes représentant le profil temporel de levée d'une soupape selon deux modes de pilotage.

### DESCRIPTION DETAILLEE DE L'INVENTION

L'invention est ici décrite en application à un moteur thermique à combustion interne fonctionnant selon un cycle à quatre temps, à savoir : admission, compression, détente, échappement.

En référence aux figures, le moteur thermique conforme à l'invention comporte un bloc 10 délimitant quatre cylindres 1, 2, 3, 4 en ligne. Les cylindres 1 et 4 encadrent les cylindres 2 et 3. Chaque cylindre 1, 2, 3, 4 définit une chambre 5 fermée d'un côté par une culasse 6 et de l'autre côté par un piston 7 mobile à coulissement dans le cylindre 1, 2, 3, 4 entre une position haute (point mort haut) et une position basse (point mort bas) et reliée par une bielle 8 à un vilebrequin 9 monté à pivotement dans le bloc 10.

Dans chaque chambre de combustion 5, débouchent un conduit d'admission 11 et un conduit d'échappement 12 qui sont ménagés dans la culasse 6. Le conduit d'admission 11 et le conduit d'échappement 12 sont équipés respectivement d'une soupape d'admission 13 et d'une soupape d'échappement 14 déplacées entre deux positions d'ouverture et de fermeture par des actionneurs électromagnétiques 15, 16 respectivement.

De manière connue en elle-même, chaque actionneur 15, 16 comprend un corps où sont montés deux électroaimants entre lesquels est montée une palette magnétique solidaire d'une extrémité d'une tige d'actionnement ayant une extrémité opposée agencée pour prendre appui sur une queue de la soupape. Chaque actionneur comprend également, de façon connue en soi, des moyens élastiques de déplacement comprenant de façon connue en elle-même un ressort intercalé entre une face du corps de l'actionneur et un épaulement de la tige d'actionnement pour rappeler la palette en position d'ouverture de la soupape et un ressort intercalé entre une face de la culasse et un épaulement de la queue de soupape pour rappeler la soupape en position de fermeture.

Une bougie 19 est montée sur la culasse 6 pour déboucher dans la chambre de combustion 5. La bougie 19 est reliée à un circuit d'allumage connu en lui-même et non représenté ici.

Un injecteur 20 d'un dispositif d'alimentation en carburant est monté également sur la culasse 6.

Les électroaimants sont commandés via un dispositif de commande 17, 18 de façon connue en elle-même via des moyens non représentés d'asservissement par exemple à partir d'un courant de consigne et d'une vitesse de déplacement de la tige d'actionnement obtenue par dérivation d'un signal de position fourni par un capteur de position de la tige.

Le dispositif de commande 17, 18, connu en lui-même, est une unité électronique, habituellement appelée VCU (de l'anglais « Valve Control Unit », unité de commande de soupape), comportant :
- un module informatique de commande incorporant un processeur susceptible d'exécuter un programme à partir de données contenues dans une mémoire et de données qui lui sont transmises par l'unité de commande du moteur 30 (ou ECU pour « Engine Control Unit »)
- un module de puissance commandé par le module de commande et relié à l'actionneur pour alimenter celui-ci.

Le programme exécuté par le dispositif de commande 17 de l'actionneur 15 de chaque soupape d'admission 13 est agencé pour réaliser une ouverture de la soupape comportant au moins une phase d'amenée de la soupape en position d'ouverture et une phase de maintien de la soupape dans une position intermédiaire entre la position de fermeture et la position d'ouverture. La phase d'amenée en position d'ouverture et la phase de maintien en position intermédiaire ont des durées déterminées en fonction d'une charge de comburant à introduire dans le cylindre. La levée de la soupape d'admission 13 à la position intermédiaire peut également être réglée en fonction de la charge de comburant à introduire dans le cylindre.

En outre, les durées sont déterminées pour que la soupape soit amenée en position de fermeture au voisinage du début d'un temps de compression du comburant suivant le temps d'admission.

Il n'est ici pas réalisé un maintien de la soupape d'admission 13 en position d'ouverture : l'actionneur 15 est piloté pour amener la soupape jusqu'à cette position puis la relâcher pour laisser la soupape repartir vers sa position de fermeture.

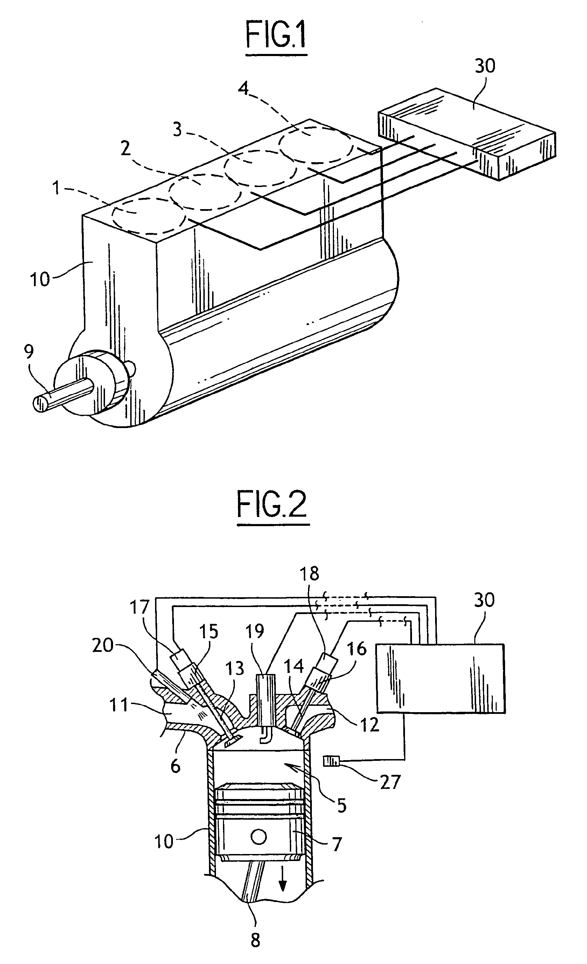

En référence à la figure 2, la phase d'amenée de la soupape en position d'ouverture I précède la phase de maintien de la soupape dans la position intermédiaire II.

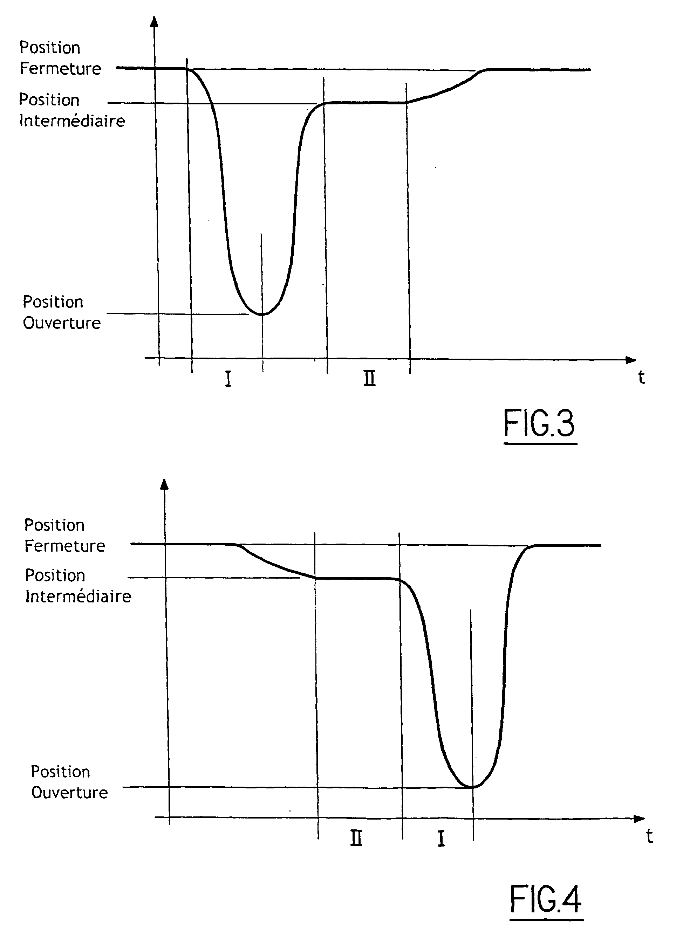

En référence à la figure 3, la phase d'amenée de la soupape en position d'ouverture I suit la phase de maintien de la soupape dans la position intermédiaire II.

Pour faire exécuter ce profil temporel au dispositif de commande 17 de l'actionneur 15, l'unité de commande 30 envoie sur le bus de communication des trames d'informations permettant de reconstruire ce profil. Le dispositif de commande 17 stocke ses trames dans une mémoire tampon jusqu'à détecter la fin de transition.

Selon une première méthode de communication, les trames comportent des triplets d'informations précisant :
- la levée souhaitée (en mm par exemple),
- la position de fin de la levée précédente (en angle vilebrequin),
- la position de début de la levée souhaitée (en angle vilebrequin).

A titre d'exemple, on pourrait avoir la succession de trames suivante :
- 2 mm, 20°, 50° (trame 1),
- 10 mm, 90°, 120° (trame 2),
- 0 mm, 150°, 180° (trame 3).

Le dispositif de commande 17 mémorise ces trames et les applique au prochain cycle moteur. La fin de la définition du profil d'une succession de trames est détectée par
- la levée souhaitée de la dernière trame est égale à 0 mm,
- la première trame de définition du profil suivant se termine par une position de début de levée souhaitée supérieure à la valeur de la trame précédente,
- absence d'information pendant une durée déterminée.

Selon une deuxième méthode de communication, les informations sont communiquées par des paires de doublets précisant :
- la levée précédente (en mm par exemple) et la position de fin de la levée précédente par exemple en angle vilebrequin (doublet 1),
- la levée suivante et la position de début de la levée suivante (doublet 2).

A titre d'exemple, on pourrait avoir la succession de trames suivante :
- 0 mm, 20° (doublet 1) ; 2 mm, 50° (doublet 2) ;
- 2 mm, 90° (doublet 1) ; 10 mm, 120° (doublet 2);
- 10 mm, 150° (doublet 1) ; 0 mm, 180° (doublet 2). La fin du profil est déterminée comme précédemment.

Bien entendu, l'invention n'est pas limitée aux modes de mise en oeuvre décrits mais englobe toute variante entrant dans le cadre de l'invention telle que définie par les revendications.

En particulier, le moteur et le dispositif de commande peuvent avoir une structure différente de celles décrites ici. L'invention est ainsi applicable au moteur à allumage commandé ou spontané, à injection directe ou indirecte, aux moteurs bi-carburants, à d'autres types d'actionnement de soupape (notamment hydraulique)...

Le procédé de l'invention est également utilisable pour les soupapes d'échappement.

En variante, il est bien entendu possible de maintenir la soupape en position d'ouverture.

Il est en outre possible d'avoir plus d'une phase intermédiaire.

Les levées correspondant à la position d'ouverture et à la position intermédiaire peuvent être déterminées en fonction de la charge de comburant à introduire dans le cylindre.

La durée de la phase d'amenée en position d'ouverture et la durée de la phase de maintien en position intermédiaire peuvent être déterminée pour que la soupape soit amenée en position de fermeture avant le début du temps de compression ou un peu après celui-ci.

D'autres méthodes de communication des informations sont envisageables entre l'unité de commande du moteur et le dispositif de commande des soupapes. En outre, les méthodes de communication des informations sont indépendantes de l'application décrite. D'autres informations peuvent en outre être échangées.

## Revendications

1. Procédé de commande d'une soupape (13) de moteur thermique (10), la soupape ayant une position de fermeture et une position d'ouverture et le procédé comprenant au moins une étape d'ouverture de la soupape, cette étape comprenant au moins une phase (I) d'amenée de la soupape en position d'ouverture et une phase (II) de maintien de la soupape dans une position intermédiaire entre la position de fermeture et la position d'ouverture **caractérisé en ce que** le procédé comprend une étape de communication, entre une unité de commande (30) du moteur et un dispositif de commande de soupape (17), d'informations telles qu'une levée de la soupape et des angles de vilebrequin, dans laquelle les informations sont communiquées sous forme de trames successives comportant chacune un triplet précisant
- la levée de la soupape,
- l'angle de vilebrequin de fin de la levée précédente,
- l'angle de vilebrequin correspondant au début de la levée souhaitée ;
ou comportant chacune une paire de doublets précisant :
- la levée précédente et l'angle de vilebrequin correspondant à la fin de la levée précédente,
- la levée suivante et l'angle de vilebrequin correspondant au début de la levée suivante.

2. Procédé selon la revendication 1, dans lequel la phase (I) d'amenée de la soupape (13) en position d'ouverture précède la phase (II) de maintien de la soupape (13) dans la position intermédiaire.

3. Procédé selon la revendication 1, dans lequel la phase (I) d'amenée de la soupape (13) en position d'ouverture suit la phase (II) de maintien de la soupape dans la position intermédiaire.

4. Dispositif de commande d'une soupape (13) entre une position de fermeture et une position d'ouverture, comportant un actionneur (15) de soupape relié à une unité informatique de commande (17) de l'actionneur, l'unité de commande étant programmée pour réaliser une ouverture de la soupape comportant au moins une phase (I) d'amenée de la soupape en position d'ouverture et une phase (II) de maintien de la soupape dans une position intermédiaire entre la position de fermeture et la position d'ouverture **caractérisé en ce que** le dispositif comprend un moyen de communication, entre une unité de commande (30) du moteur et le dispositif de commande de soupape (17), d'informations telles qu'une levée de la soupape et des angles de vilebrequin, dans lequel les informations sont communiquées sous forme de trames successives comportant chacune un triplet précisant :
- la levée de la soupape,
- l'angle de vilebrequin de fin de la levée précédente,
- l'angle de vilebrequin correspondant au début de la levée souhaitée ;
ou comportant chacune une paire de doublets précisant :
- la levée précédente et l'angle de vilebrequin correspondant à la fin de la levée précédente,
- la levée suivante et l'angle de vilebrequin correspondant au début de la levée suivante.

5. Dispositif selon la revendication 4, dans lequel la phase (I) d'amenée de la soupape (13) en position d'ouverture précède la phase (II) de maintien de la soupape dans la position intermédiaire.

6. Dispositif selon la revendication 4, dans lequel la phase (I) d'amenée de la soupape (13) en position d'ouverture suit la phase (II) de maintien de la soupape dans la position intermédiaire.

7. Procédé d'alimentation en comburant d'un cylindre (1, 2, 3, 4) de moteur thermique (10) pendant un temps d'admission en déplaçant une soupape d'admission entre une position de fermeture et une position d'ouverture, **caractérisé en ce qu'**il comprend le procédé de commande de la revendication 1.

8. Procédé selon la revendication 7, dans lequel la phase (I) d'amenée de la soupape (13) en position d'ouverture précède la phase (II) de maintien de la soupape (13) dans la position intermédiaire.

9. Procédé selon la revendication 7, dans lequel la phase (I) d'amenée de la soupape (13) en position d'ouverture suit la phase (II) de maintien de la soupape dans la position intermédiaire.

10. Procédé selon la revendication 7, dans lequel les phases d'amenée et de maintien (I, II) ont des durées déterminées en fonction d'une charge de comburant à introduire dans le cylindre (1, 2, 3, 4).

11. Procédé selon la revendication 10, dans lequel les durées sont déterminées pour que la soupape (13) soit amenée en position de fermeture au voisinage du début d'un temps de compression du comburant suivant le temps d'admission.

## Claims

1. Method for controlling a valve (13) of a combustion engine (10), the valve having a closed position and an open position and the method comprising at least one step of opening the valve, this step comprising at least one phase (I) of bringing the valve into the open position and one phase (II) of holding the valve in an intermediate position between the closed position and the open position, **characterized in that** the method comprises a step in which information such as a valve lift and crank angles are communicated between an engine control unit (30) and a valve control device (17), in which step the information is communicated in the form of successive frames each comprising a triplet specifying:
- the valve lift,
- the crank angle at the end of the previous lift,
- the crank angle corresponding to the start of the desired lift;
or each comprising a pair of doublets specifying:
- the previous lift and the crank angle corresponding to the end of the previous lift,
- the next lift and the crank angle corresponding to the start of the next lift.

2. Method according to Claim 1, in which the phase (I) of bringing the valve (13) into the open position precedes the phase (II) of holding the valve (13) in the intermediate position.

3. Method according to Claim 1, in which the phase (I) of bringing the valve (13) into the open position follows the phase (II) of holding the valve in the intermediate position.

4. Device for controlling a valve (13) between a closed position and an open position, comprising a valve actuator (15) connected to a computerized actuator control unit (17), the control unit being programmed to open the valve in at least one phase (I) of bringing the valve into the open position and one phase (II) of holding the valve in an intermediate position between the closed position and the open position, **characterized in that** the device comprises a means for communicating information such as a valve lift and crank angles between an engine control unit (30) and a valve control device (17), in which device the information is communicated in the form of successive frames each comprising a triplet specifying:
- the valve lift,
- the crank angle at the end of the previous lift,
- the crank angle corresponding to the start of the desired lift;
or each comprising a pair of doublets specifying:
- the previous lift and the crank angle corresponding to the end of the previous lift,
- the next lift and the crank angle corresponding to the start of the next lift.

5. Device according to Claim 4, in which the phase (I) of bringing the valve (13) into the open position precedes the phase (II) of holding the valve in the intermediate position.

6. Device according to Claim 4, in which the phase (I) of bringing the valve (13) into the open position follows the phase (II) of holding the valve in the intermediate position.

7. Method of supplying a cylinder (1, 2, 3, 4) of a combustion engine (10) with oxidant during an induction stroke by moving an inlet valve between a closed position and an open position, **characterized in that** it comprises the control method of Claim 1.

8. Method according to Claim 7, in which the phase (I) of bringing the valve (13) into the open position precedes the phase (II) of holding the valve (13) in the intermediate position.

9. Method according to Claim 7, in which the phase (I) of bringing the valve (13) into the open position follows the phase (II) of holding the valve in the intermediate position.

10. Method according to Claim 7, in which the bringing and holding phases (I, II) have durations that are determined as a function of a charge of oxidant to be introduced into the cylinder (1, 2, 3, 4).

11. Method according to Claim 10, in which the durations are determined in such a way that the valve (13) is brought into the closed position near the start of an oxidant compression stroke that follows the induction stroke.

## Patentansprüche

1. Verfahren zur Steuerung eines Ventils (13) einer Wärmekraftmaschine (10), wobei das Ventil eine Schließposition und eine Öffnungsposition aufweist und das Verfahren mindestens einen Schritt des Öffnens des Ventils aufweist, wobei dieser Schritt mindestens eine Phase (I) des Bewegens des Ventils in die Öffnungsposition und eine Phase (II) des Haltens des Ventils in einer Zwischenposition zwischen der Schließposition und der Öffnungsposition aufweist, **dadurch gekennzeichnet, dass** das Verfahren einen Schritt der Übertragung von solchen Informationen zwischen einer Steuereinheit (30) der Kraftmaschine und einer Ventilsteuervorrichtung (17) aufweist, wie eines Hubes des Ventils und von Kurbelwellenwinkeln, wobei die Informationen in Form von aufeinanderfolgenden Rahmen übertragen werden, die jeweils ein Triplett aufweisen, welches Folgendes angibt:
- den Hub des Ventils,
- den Kurbelwellenwinkel am Ende des vorhergehenden Hubes,
- den Kurbelwellenwinkel, der dem Beginn des gewünschten Hubes entspricht;
oder jeweils ein Paar von Dubletts aufweisen, welches Folgendes angibt:
- den vorhergehenden Hub und den Kurbelwellenwinkel, der dem Ende des vorhergehenden Hubes entspricht,
- den folgenden Hub und den Kurbelwellenwinkel, der dem Beginn des folgenden Hubes entspricht.

2. Verfahren nach Anspruch 1, wobei die Phase (I) des Bewegens des Ventils (13) in die Öffnungsposition der Phase (II) des Haltens des Ventils (13) in der Zwischenposition vorangeht.

3. Verfahren nach Anspruch 1, wobei die Phase (I) des Bewegens des Ventils (13) in die Öffnungsposition auf die Phase (II) des Haltens des Ventils in der Zwischenposition folgt.

4. Vorrichtung zur Steuerung eines Ventils (13) zwischen einer Schließposition und einer Öffnungsposition, die ein Ventilstellglied (15) aufweist, das mit einer elektronischen Steuereinheit (17) des Stellgliedes verbunden ist, wobei die Steuereinheit dafür programmiert ist, ein Öffnen des Ventils durchzuführen, das mindestens eine Phase (I) des Bewegens des Ventils in die Öffnungsposition und eine Phase (II) des Haltens des Ventils in einer Zwischenposition zwischen der Schließposition und der Öffnungsposition aufweist, **dadurch gekennzeichnet, dass** die Vorrichtung ein Mittel zur Übertragung von solchen Informationen zwischen einer Steuereinheit (30) der Kraftmaschine und der Ventilsteuervorrichtung (17) aufweist, wie eines Hubes des Ventils und von Kurbelwellenwinkeln, wobei die Informationen in Form von aufeinanderfolgenden Rahmen übertragen werden, die jeweils ein Triplett aufweisen, welches Folgendes angibt:
- den Hub des Ventils,
- den Kurbelwellenwinkel am Ende des vorhergehenden Hubes,
- den Kurbelwellenwinkel, der dem Beginn des gewünschten Hubes entspricht;
oder jeweils ein Paar von Dubletts aufweisen, welches Folgendes angibt:
- den vorhergehenden Hub und den Kurbelwellenwinkel, der dem Ende des vorhergehenden Hubes entspricht,
- den folgenden Hub und den Kurbelwellenwinkel, der dem Beginn des folgenden Hubes entspricht.

5. Vorrichtung nach Anspruch 4, wobei die Phase (I) des Bewegens des Ventils (13) in die Öffnungsposition der Phase (II) des Haltens des Ventils in der Zwischenposition vorangeht.

6. Vorrichtung nach Anspruch 4, wobei die Phase (I) des Bewegens des Ventils (13) in die Öffnungsposition auf die Phase (II) des Haltens des Ventils in der Zwischenposition folgt.

7. Verfahren zur Versorgung eines Zylinders (1, 2, 3, 4) einer Wärmekraftmaschine (10) während eines Ansaugtaktes mit Oxidationsmittel durch Verstellen eines Einlassventils zwischen einer Schließposition und einer Öffnungsposition, **dadurch gekennzeichnet, dass** es das Verfahren zur Steuerung nach Anspruch 1 beinhaltet.

8. Verfahren nach Anspruch 7, wobei die Phase (I) des Bewegens des Ventils (13) in die Öffnungsposition der Phase (II) des Haltens des Ventils (13) in der Zwischenposition vorangeht.

9. Verfahren nach Anspruch 7, wobei die Phase (I) des Bewegens des Ventils (13) in die Öffnungsposition auf die Phase (II) des Haltens des Ventils in der Zwischenposition folgt.

10. Verfahren nach Anspruch 7, wobei die Phasen des Bewegens und des Haltens (I, II) in Abhängigkeit von einer in den Zylinder (1, 2, 3, 4) einzuführenden Oxidationsmittel-Ladung bestimmte Dauern haben.

11. Verfahren nach Anspruch 10, wobei die Dauern so bestimmt werden, dass das Ventil (13) in der Nähe des Beginns eines Taktes der Verdichtung des Oxidationsmittels, der auf den Ansaugtakt folgt, in die Schließposition bewegt wird.
